# EUROPÄISCHE PATENTSCHRIFT

(11) **EP 2 218 631 B1**
(45) Veröffentlichungstag und Bekanntmachung des Hinweises auf die Patenterteilung: **13.01.2016**
(21) Anmeldenummer: 10000410.0
(22) Anmeldetag: 18.01.2010
(51) Int. Cl.: B62B 5/00

(54) **Lagertechnikstapler, insbesondere Hubwagen**
Storage forklift, in particular jack lift
Chariot élévateur de stockage, notamment chariot de levage

(30) Priorität: 11.02.2009 DE 102009008515; 29.10.2009 DE 102009051275
(43) Veröffentlichungstag der Anmeldung: 18.08.2010
(73) Patentinhaber: OM Carrelli Elevatori S.p.A., 20020 Lainate (MI) (IT)
(72) Erfinder: Alegre, Jean-Pierre, 60150 Villers sur Coudun (FR); Vachard, Laurent, 60430 Silly Tillard (FR); Wident, Alain, 60480 Reuil sur Brèche (FR)
(74) Vertreter: Geirhos, Johann

(56) Entgegenhaltungen:
- EP-A1- 0 449 029
- FR-A1- 2 822 124
- US-A1- 2005 269 142
- US-A1- 2010 089 703

## Beschreibung

Die Erfindung betrifft einen Lagertechnikstapler, insbesondere Hubwagen, zum wahlweisen Betrieb im Mitgängerbetrieb und Mitfahrerbetrieb mit einem Fahrerplatzmodul, das eine Fahrerstandplattform, insbesondere eine klappbare Fahrerstandplattform, und schwenkbare Seitenbügel umfasst.

Als Hubwagen ausgebildete Lagertechnikstapler, die sowohl für einen Mitgängerbetrieb als auch für einen Mitfahrerbetrieb geeignet sind, können als Niederhubwagen, Hochhubwagen oder Niederhubkommissionierer ausgebildet sein.

Ein Fahrerplatzmodul umfasst hierbei eine klappbare Fahrerstandplattform, die um eine im Wesentlichen horizontale Schwenkachse am Lagertechnikstapler angeordnet ist. Im Mitgängerbetrieb befindet sich die Fahrerstandplattform in einer eingeklappten Stellung und kann für den Mitfahrerbetrieb ausgeklappt werden. Das Fahrerplatzmodul kann zudem zwei der Fahrerstandplattform zugeordnete Seitenbügel aufweisen, die einer auf der ausgeklappten Fahrerstandplattform stehenden Bedienperson in seitlicher Richtung zusätzlichen Halt geben. Die Seitenbügel sind hierbei um eine im Wesentlichen vertikale Schwenkachse klappbar an dem Lagertechnikgerät angeordnet und befinden sich im Mitgängerbetrieb in einer eingeklappten Stellung und können im Mitfahrerbetrieb in eine ausgeklappte Stellung verschwenkt werden.

Ein Fahrerplatzmodul mit einer klappbaren Fahrerstandplattform und schwenkbaren Seitenbügeln für einen gattungsgemäßen Lagertechnikstapler ist aus der DE 101 59 565 A1 bekannt.

Aus der FR 2 822 124 A1 ist ein gattungsgemäßer, als Hubwagen ausgebildeter Lagertechnikstapler für den Mitgänger- und Mitfahrerbetrieb offenbart, der mit einer klappbaren Fahrerstandplattform und ausfaltbaren Seitenbügeln versehen ist. Um eine niedrige Bauhöhe des Antriebsteils für eine niedrige Anbringung der Deichsel zu erzielen, sind die Seitenbügel an Konsolen schwenkbar angeordnet, die um 45° zur Fahrzeuglängsachse geneigt angeordnet sind. Die Seitenbügel weisen im Bereich der Schwenkachsen einen Abschnitt auf, der um 135° Grad zu den Seitenbügeln geneigt ist. Durch diese Geometrie wird erzielt, dass die Seitenbügel in einer eingeklappten Stellung in einer tiefen Position an der Frontseite des Antriebsteils angeordnet sind und die Bewegungen der Deichsel nicht behindern. In einer ausgefalteten Stellung für den Mitfahrerbetrieb befinden sich die Seitenbügel auf Hüfthöhe einer Bedienposition und werden in dieser Position durch einen Stift fixiert.

Der vorliegenden Erfindung liegt die Aufgabe zugrunde, einen Lagertechnikstapler der eingangs genannten Gattung zur Verfügung zu stellen, der im Mitfahrerbetrieb eine verbesserte Ergonomie und eine erhöhte Betriebssicherheit aufweist.

Diese Aufgabe wird erfindungsgemäß dadurch gelöst, dass die Seitenbügel in der Stellung für den Mitfahrerbetrieb zur Höhenanpassung der Seitenbügel an die Körpergröße einer auf der Fahrerstandplattform stehenden Bedienperson höhenverstellbar und in unterschiedlichen Höhenpositionen fixierbar sind. Durch höhenverstellbaren Seitenbügel kann die Höhe der Seitenbügel auf einfache Weise an die Größe der auf der Fahrerstandplattform stehenden Bedienperson im Mitfahrerbetrieb angepasst werden, wodurch sich eine verbesserte Ergonomie für die Bedienperson im Mitfahrerbetrieb ergibt. Zudem können durch höhenverstellbare Seitenbügel auf einfache Weise die Seitenbügel auf eine optimale Höhe, insbesondere die Hüfthöhe, der auf der Fahrerstandplattform stehenden Bedienperson, eingestellt werden, in der die Seitenbügel optimalen seitlichen Halt für die auf der Fahrerstandplattform stehenden Bedienperson im Mitfahrerbetrieb bieten, wodurch weiterhin die Betriebssicherheit des Lagertechnikstaplers im Mitfahrerbetrieb erhöht werden kann.

Gemäß einer bevorzugten Ausführungsform der Erfindung sind die Seitenbügel um jeweils eine im Wesentlichen vertikale Schwenkachse klappbar an einem Antriebsteil gelagert, wobei die Seitenbügel in einer ausgeklappten Stellung für den Mitfahrerbetrieb höhenverstellbar sind. Mit einer derartigen Kinematik, bei der die Seitenbügel durch Schwenken um die vertikale Achse von der eingeklappten Stellung für den Mitgängerbetrieb in die ausgeklappte Stellung für den Mitfahrerbetrieb geklappt werden können und in der ausgeklappten Stellung höhenverstellbar sind, ergibt sich ein einfacher Aufbau der klappbaren und höhenverstellbaren Seitenbügel mit einem geringen Bauaufwand.

Besondere Vorteile sind erzielbar, wenn die Seitenbügel gemäß einer vorteilhaften Weiterbildung der Erfindung in der ausgeklappten Stellung zur Höhenverstellung um eine im Wesentlichen horizontale Schwenkachse verschwenkbar sind. Durch Verschwenken der Seitenbügel um eine horizontale Schwenkachse kann mit einfachem Bauaufwand eine Höhenverstellung der Seitenbügel in der ausgeklappten Stellung erzielt werden.

Die Seitenbügel bestehen gemäß einer bevorzugten Ausgestaltungsform der Erfindung aus jeweils einem Schwenkträger, der an dem Antriebsteil um die im Wesentlichen vertikale Schwenkachse klappbar gelagert ist, und einem an dem Schwenkträger um die im Wesentlichen horizontale Schwenkachse verstellbar angeordneten Bügelabschnitt. Mit derartigen, aus einem Schwenkträger und einem Bügelabschnitt bestehenden Seitenbügeln kann die Klappbewegung von der eingeklappten Stellung in die ausgeklappte Stellung an den Schwenkträgern und die Schwenkbewegung zur Höhenverstellung an den Bügelabschnitten mit geringem Bauaufwand erzielt werden.

Durch Verschwenken der Bügelabschnitte, an denen sich die auf der Fahrerstandplattform stehende Bedienperson seitlich abstützt, um die horizontale Achse kann somit mit geringem Bauaufwand eine Höhenverstellung der Bügelabschnitte und somit der Seitenbügel in der ausgeklappten Stellung für den Mitfahrerbetrieb erzielt werden. Es ist jedoch ebenfalls möglich, durch lineares Verschieben der Schwenkträger entlang der vertikalen Schwenkachse die Höhenverstellung der Bügelabschnitte und somit der Seitenbügel zu erzielen.

Die Bügelabschnitte können hierbei um die horizontale Schwenkachse in Stufen verstellt und fixiert werden. Eine derartige gerastete Höhenverstellung der Bügelabschnitte ist mit geringem Bauaufwand realisierbar.

Vorteilhafterweise sind die Bügelabschnitte um die horizontale Schwenkachse stufenlos verstellbar und fixierbar, so dass eine stufenlose Höhenverstellung erzielbar ist.

Eine stufenlose Höhenverstellung der Bügelabschnitte ist auf einfache Weise bei geringem Bauaufwand erzielbar, wenn zwischen dem Schwenkträger und dem Bügelabschnitt eine Rastverzahnung ausgebildet ist.

Zweckmäßigerweise ist zwischen dem Bügelabschnitt und dem Schwenkträger eine Feststelleinrichtung ausgebildet. Mit einer derartigen Feststelleinrichtung kann auf einfache Weise eine Arretierung und stabile Fixierung der Bügelabschnitte in der gewählten Höhenposition erzielt werden.

Besondere Vorteile ergeben sich, wenn die Feststelleinrichtung an der Innenseite des Bügelabschnitts angeordnet ist. Eine auf der Fahrerstandplattform stehende Bedienperson kann somit mit einer Hand den Bügelabschnitt zur Höhenverstellung um die horizontale Schwenkachse verschwenken und mit der anderen Hand die Feststelleinrichtung betätigen, wodurch sich eine einfache Handhabung der höhenverstellbaren Seitenbügel ergibt.

Die Feststelleinrichtung kann hierbei von einer Klemmeinrichtung, insbesondere einer Klemmschraube oder einem Klemmhebel für die Rastverzahnung, gebildet sein, wodurch sich eine einfach handzuhabende und schnell zu betätigende Verriegelung der Bügelabschnitte erzielen lässt.

Die Feststelleinrichtung kann ebenfalls von einem Arretierbolzen, insbesondere einem federbelasteten Arretierbolzen, gebildet werden, wodurch ebenfalls eine einfach aufgebaute Feststelleinrichtung erzielt werden kann, die einfach handzuhaben und schnell zu betätigen ist.

Sofern gemäß einer vorteilhaften Weiterbildung der Erfindung mindestens eine Sensoreinrichtung zur Erfassung der eingeklappten Stellung der Seitenbügel für den Mitgängerbetrieb und zur Erfassung der ausgeklappten Stellung der Seitenbügel für den Mitfahrerbetrieb vorgesehen ist, kann mit geringem zusätzlichen Aufwand die Fahrsteuerung des Lagertechnikstaplers beeinflusst werden. Mit einer derartigen Sensoreinrichtung, die mit der Fahrsteuerung in Wirkverbindung steht, kann auf einfache Weise die maximal zulässige Fahrgeschwindigkeit in Abhängigkeit von der Stellung der Seitenbügel beeinflusst werden. Somit ist es auf einfache Weise möglich, bei eingeklappten Seitenbügeln, wobei der Lagertechnikstapler im Mitgängerbetrieb oder im Mitfahrerbetrieb bei ausgeklappter Fahrerstandplattform bedient werden kann, die maximale Fahrgeschwindigkeit des Lagertechnikstaplers auf einen niederen Wert zu begrenzen, beispielsweise 6 km/h, und bei ausgeklappten Seitenbügeln eine erhöhte maximale Fahrgeschwindigkeit oberhalb von 6 km/h für den Mitfahrerbetrieb zu ermöglichen.

Weitere Vorteile und Einzelheiten der Erfindung werden anhand des in den schematischen Figuren dargestellten Ausführungsbeispiels näher erläutert. Hierbei zeigen
- Figur 1: einen erfindungsgemäßen Lagertechnikstapler in einer persepektifischen Darstellung,
- Figur 2: den Lagertechnikstapler gemäß der Figur 1 mit ausgeklappten Seitenbügeln,
- Figuren 3 bis 5: eine Seitenansicht des erfindungsgemäßen Lagertechnikstaplers mit den Seitenbügeln in unterschiedlichen Höhen,
- Figur 6: eine erste Ausführungsform eines erfindungsgemäßen Seitenbügels in einer vergrößerten Darstellung,
- Figur 7: eine zweite Ausführungsform eines erfindungsgemäßen Seitenbügels in einer vergrößerten Darstellung und
- Figur 8: eine Ansicht des Seitenbügels der Figur 7 gemäß Ansicht A der Figur 7.

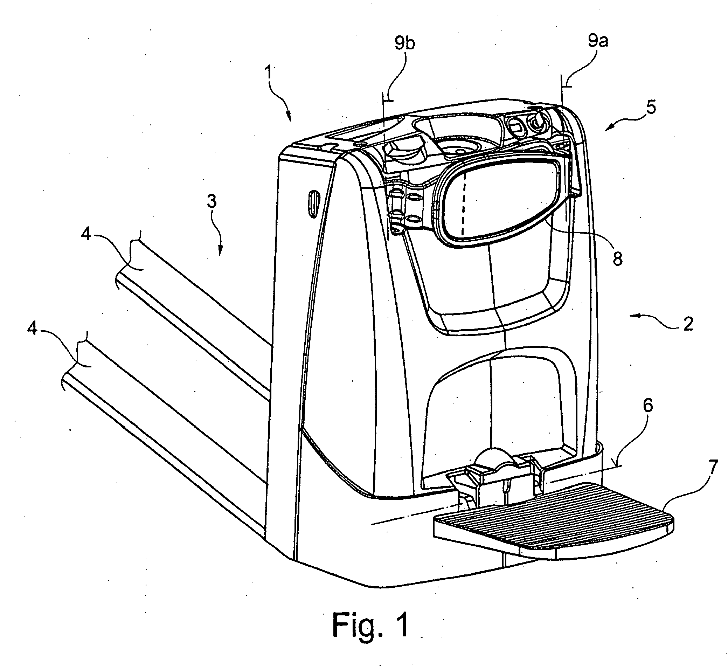

In der Figur 1 ist ein erfindungsgemäßer Lagertechnikstapler 1, der beispielsweise als deichselgeführter Hubwagen, insbesondere Niederhubwagen, ausgebildet ist, dargestellt. Der Lagertechnikstapler 1 weist einen Antriebsteil 2 und einen relativ zu dem Antriebsteil 2 anhebbaren und absenkbaren Lastteil 3 auf. Der Lastteil 3 umfasst eine von beispielsweise zwei seitlich beabstandeten Lastarmen 4 gebildete Lastgabel.

Mittels an den Spitzen der Lastarme 4 angeordneten und nicht mehr dargestellter Lastrollen ist der Lastteil 3 auf einer Fahrbahn abgestützt.

In dem Antriebsteil 2 ist eine nicht mehr dargestellte Fahrantriebseinheit, die ein Antriebsrad und einen das Antriebsrad antreibenden elektrischen Fahrantriebsmotor umfasst, um eine vertikale Schwenkachse lenkbar angeordnet ist. Das Lenken und die Bedienung des Lagertechnikstaplers 1 durch eine Bedienperson erfolgt mittels einer nicht mehr dargestellten Deichsel, die an der Oberseite des Antriebsteils 2 in dessen mittleren Bereich angeordnet ist.

Der erfindungsgemäße Lagertechnikstapler 1 ist zum wahlweisen Betrieb im Mitgängerbetrieb und im Mitfahrerbetrieb vorgesehen. Hierzu ist an dem Antriebsteil 2 gegenüberliegend zu dem Lastteil 3 ein Fahrerplatzmodul 5 angeordnet, das eine um eine horizontale Schwenkachse 6 klappbar am Antriebsteil 2 angeordnete Fahrerstandplattform 7 und zwei der Fahrerstandplattform 7 zugeordnete, schwenkbare Seitenbügel 8 umfasst, die um jeweils eine vertikale Schwenkachse 9a, 9b an den seitlichen Bereichen des Antriebsteil 2 schwenkbar angeordnet sind.

In der Vorderseite des Antriebsteils 2 sind für die eingeklappte Fahrerstandplattform 7 und die eingeklappten Seitenbügel 8 jeweils eine Ausbuchtung vorhanden, so dass im Mitgängerbetrieb bei eingeklappter Fahrerstandplattform 7 und eingeklappten Seitenbügeln 8 die Fahrerstandplattform 7 und die Seitenbügel 8 innerhalb der Kontur des Antriebsteils 2 angeordnet sind.

In der Figur 1 ist der Lagertechnikstapler 1 im Mitfahrerbetrieb mit ausgeklappter Fahrerstandplattform 7 und eingeklappten Seitenbügeln 8 dargestellt.

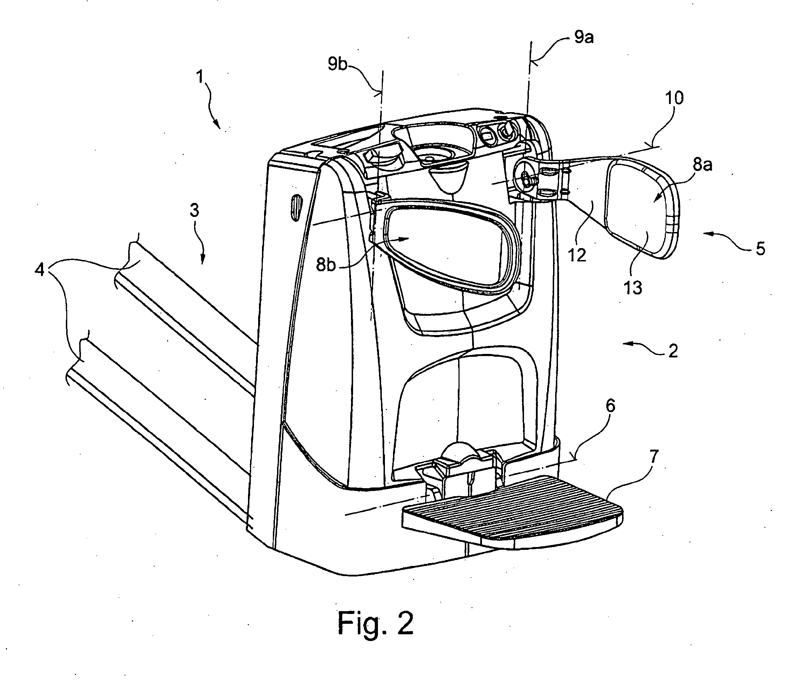

Durch Verschwenken der Seitenbügel 8 um die entsprechende Schwenkachse 9a, 9b nach Außen kann der Lagertechnikstapler 1 in die in der Figur 2 dargestellte Stellung für den Mitfahrerbetrieb gebracht werden, in der die in der ausgeklappten Stellung befindlichen beiden Seitenbügel 8a, 8b einer auf der Fahrerstandplattform 7 stehenden Bedienperson zusätzlich seitlichen Halt bieten.

Erfindungsgemäß sind die Seitenbügel 8a, 8b um eine horizontale Schwenkachse 10 verschwenkbar und somit höhenverstellbar.

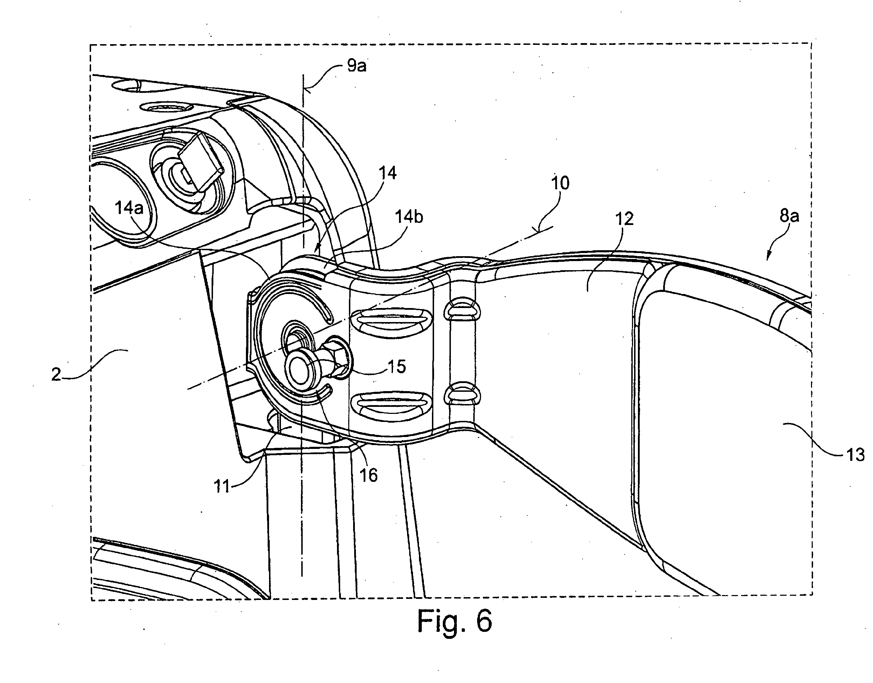

Die Seitenbügel 8a bzw. 8b bestehen hierzu - wie in der Figur 6 dargestellt ist, in der eine erste Ausführungsform eines Seitenbügels 8a, 8b dargestellt ist - aus jeweils einem vertikal angeordneten Schwenkträger 11, der am Antriebsteil 2 um die vertikale Schwenkachse 9a bzw. 9b schwenkbar und somit klappbar gelagert ist. Am oberen Ende des Schwenkträgers 11 ist an den Schwenkträgern 11 um die horizontale Schwenkachse 10 verstellbar ein Bügelabschnitt 12 angeordnet, der an der Innenseite mit einem Seitenpolster 13 versehen sein kann. Der Bügelabschnitt 12 ist im vorderen und dem Antriebsteil 2 zugewandten Bereich nach Innen gekröpft und bildet eine von zwei plattenförmigen Seitenabschnitten 14a, 14b gebildete Lagergabel 14. Zwischen den Seitenabschnitten 14a, 14b ist der Schwenkträger 11 angeordnet. Im Bereich der Lagergabel 14 ist zwischen dem Bügelabschnitt 12 und dem Schwenkträger 11 die Schwenkachse 10 angeordnet, die beispielsweise von einem entsprechenden Lagerbolzen gebildet ist.

Der Bügelabschnitt 12 kann an dem Schwenkträger 11 um die horizontale Schwenkachse 10 in Stufen verstellt werden, beispielsweise mittels einer entsprechenden Lochleiste zwischen dem Schwenkträger 11 und dem Bügelabschnitt 12.

An der Innenseite des Bügelabschnitts 12 ist eine von einem Arretierbolzen 15 gebildete Feststelleinrichtung 16 vorgesehen, mittels der der Bügelabschnitt 12 um die Schwenkachse 10 relativ zum Schwenkträger 11 in der gewählten Position fixiert werden kann.

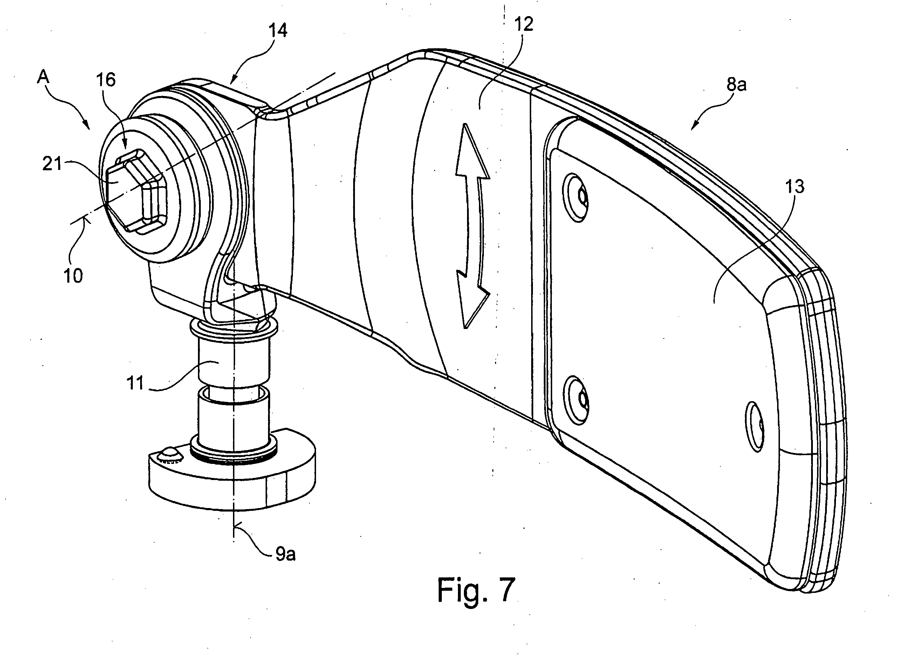

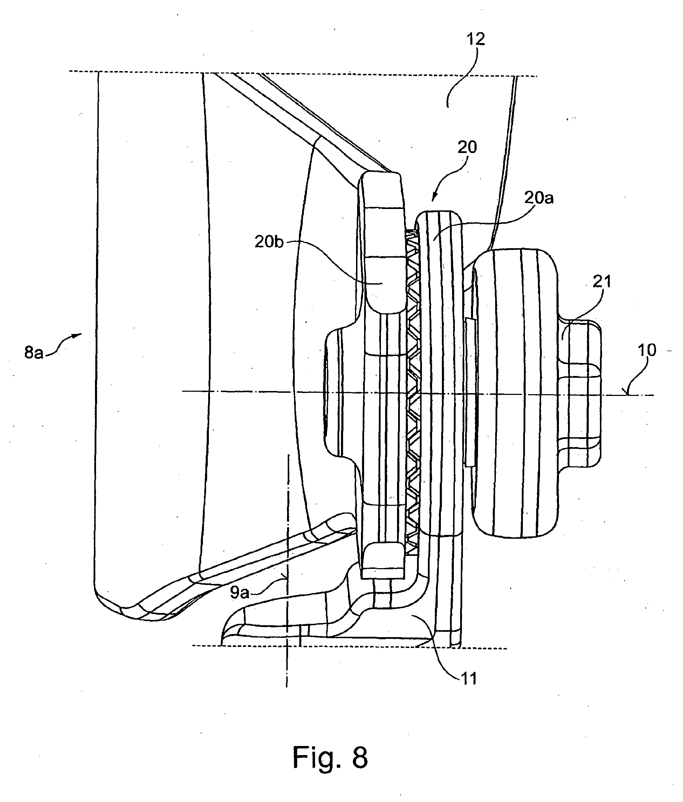

In den Figuren 7 und 8 ist eine zweite Ausführungsform eines Seitenbügels 8a bzw. 8b dargestellt, bei dem der Bügelabschnitt 12 stufenlos am Schwenkträger 11 um die horizontale Schwenkachse 10 verstellbar angeordnet ist. Zwischen dem Schwenkträger 11 und dem Bügelabschnitt 12 ist hierzu eine Rastverzahnung 20 mit einer als Klemmschraube ausgebildeten Klemmeinrichtung 21 als Feststelleinrichtung 16 ausgebildet. Im Bereich der Lagergabel 14 ist hierbei ein Rastverzahnungselement 20a an dem Schwenkträger 11 ausgebildet, das mit einem Rastverzahnungselement 20b an dem Bügelabschnitt 12 zusammenwirkt. Die Schwenkachse 10 zwischen dem Schwenkträger 11 und dem Bügelabschnitt 12 ist von einem nicht näher dargestellten, an dem Bügelabschnitt 12 angeordneten Bolzen mit einem Gewinde gebildet, der durch eine Bohrung im Bereich des Rastverzahnungselement 20a des Schwenkträgers 11 gesteckt und auf den die an der Innenseite des Bügelabschnitts 12 angeordnete und von der Klemmschraube gebildete Klemmeinrichtung 21 aufgeschraubt werden kann. Durch die Klemmeinrichtung 21 können somit die Rastverzahnungselemente 20a, 20b der Rastverzahnung 20 axial verspannt werden und somit der Bügelabschnitt 12 um die Schwenkachse 10 relativ zum Schwenkträger 11 in der gewählten Position fixiert und verriegelt werden.

In der ausgeklappten Stellung der Seitenbügel 8a bzw. 8b kann von einer auf der ausgeklappten Fahrerstandplattform 7 stehenden Bedienperson durch Ziehen an dem Arretierbolzen 15 bzw. Lösen der Klemmeinrichtung 21 mit einer Hand die Verriegelung zwischen dem Bügelabschnitt 12 und dem Schwenkträger 11 gelöst werden und der Bügelabschnitt 12 mit der anderen Hand um die horizontale Schwenkachse 10 zur Höhenverstellung und Anpassung an seine Körpergröße verschwenkt werden. Durch Loslassen des Arretierbolzens 15 bzw. Anziehen der Klemmeinrichtung 21 wird der Bügelabschnitt 12 in der gewählten Höhenposition fixiert.

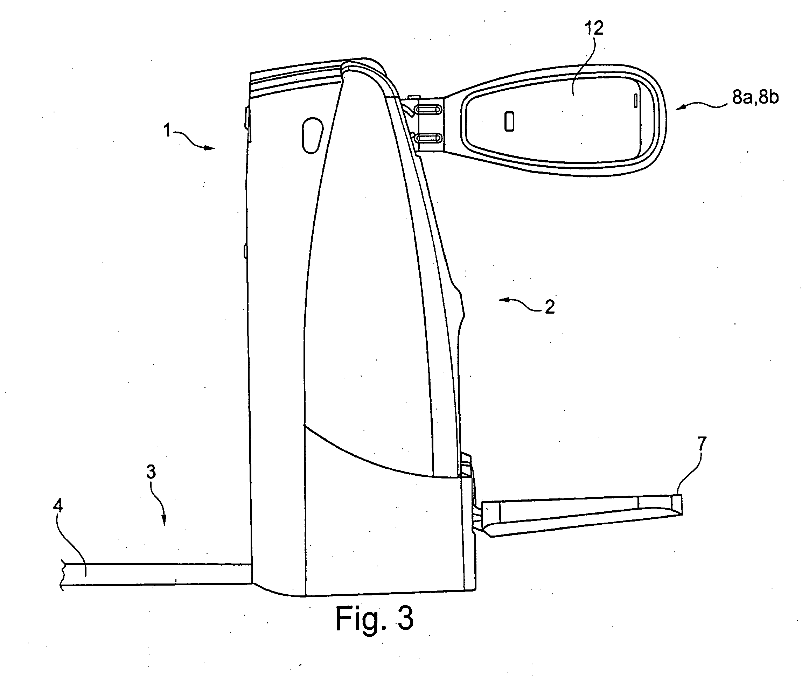

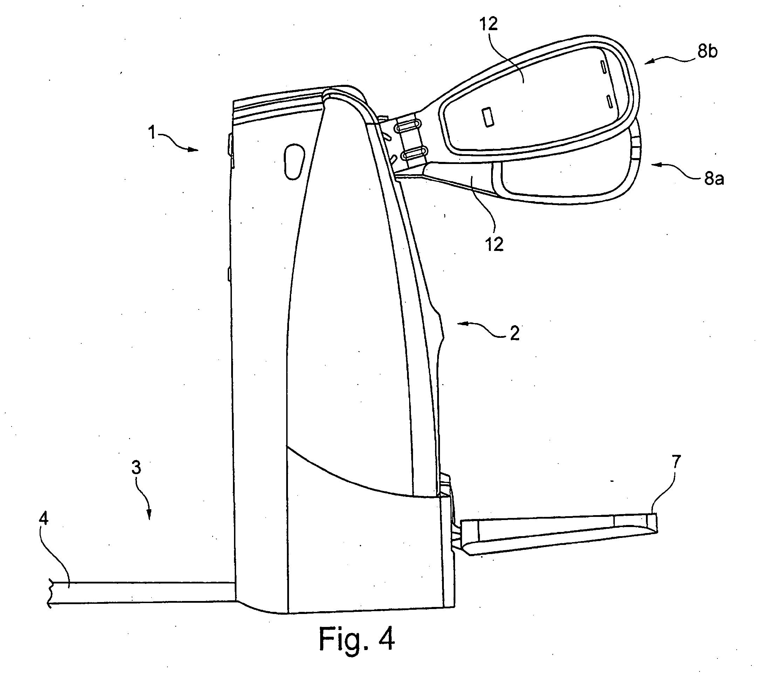

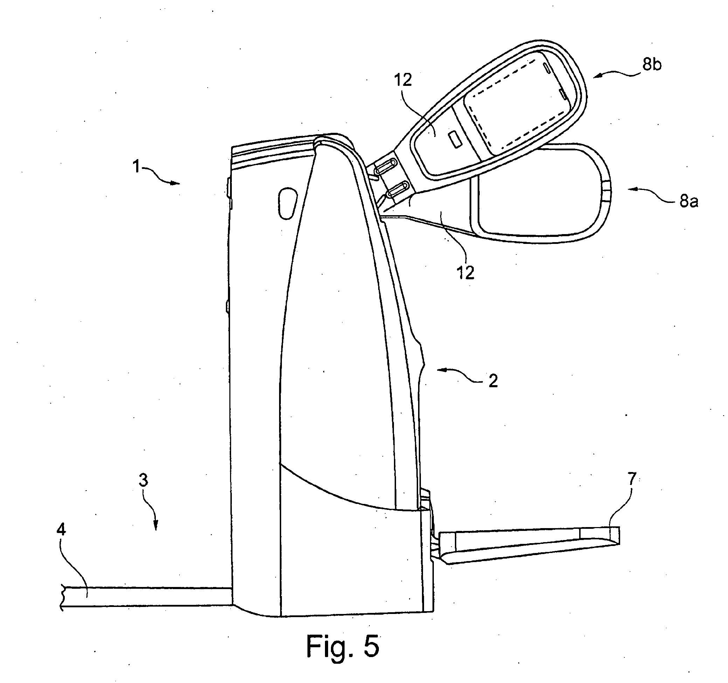

In den Figuren 3 bis 5 sind unterschiedliche Höhenpositionen der Seitenbügel 8a, 8b dargestellt, die durch Verschwenken des entsprechenden Bügelabschnitts 12 um die horizontale Schwenkachse 10 erzielbar sind. In der Figur 3 befinden sich die Bügelabschnitte 12 in einer tiefsten Stellung. Die Figur 5 zeigt den Bügelabschnitt 12 des vorderen Seitenbügels 8b in der höchsten Position. In der Figur 4 ist eine mittlere Stellung für den höhenverstellbaren Bügelabschnitt 12 des vorderen Seitenbügels 8b dargestellt.

## Patentansprüche

1. Lagertechnikstapler, insbesondere Hubwagen, zum wahlweisen Betrieb im Mitgängerbetrieb und Mitfahrerbetrieb mit einem Fahrerplatzmodul, das eine Fahrerstandplattform, insbesondere eine klappbare Fahrerstandplattform, und schwenkbare Seitenbügel umfasst, **dadurch gekennzeichnet, dass** die Seitenbügel (8a; 8b) in der Stellung für den Mitfahrerbetrieb zur Höhenanpassung der Seitenbügel an die Körpergröße einer auf der Fahrerstandplattform stehenden Bedienperson höhenverstellbar und in unterschiedlichen Höhenpositionen fixierbar sind.

2. Lagertechnikstapler nach Anspruch 1, **dadurch gekennzeichnet, dass** die Seitenbügel (8a; 8b) um jeweils eine im Wesentlichen vertikale Schwenkachse (9a; 9b) klappbar an einem Antriebsteil (2) gelagert sind, wobei die Seitenbügel (8a; 8b) in einer ausgeklappten Stellung für den Mitfahrerbetrieb höhenverstellbar sind.

3. Lagertechnikstapler nach Anspruch 2, **dadurch gekennzeichnet, dass** die Seitenbügel (8a; 8b) in der ausgeklappten Stellung zur Höhenverstellung um eine im Wesentlichen horizontale Schwenkachse (10) verschwenkbar sind.

4. Lagertechnikstapler nach Anspruch 3, **dadurch gekennzeichnet, dass** die Seitenbügel (8a; 8b) aus jeweils einem Schwenkträger (11), der an dem Antriebsteil (2) um die im Wesentlichen vertikale Schwenkachse (9a; 9b) klappbar gelagert ist, und einem an dem Schwenkträger (11) um die im Wesentlichen horizontale Schwenkachse (10) verstellbar angeordneten Bügelabschnitt (12) bestehen.

5. Lagertechnikstapler nach Anspruch 4, **dadurch gekennzeichnet, dass** die Bügelabschnitte (12) um die horizontale Schwenkachse (10) stufenlos verstellbar und stufenlos fixierbar sind.

6. Lagertechnikstapler nach Anspruch 5, **dadurch gekennzeichnet, dass** zwischen dem Schwenkträger (11) und dem Bügelabschnitt (12) eine Rastverzahnung (20) ausgebildet ist.

7. Lagertechnikstapler nach einem der Ansprüche 4 bis 6, **dadurch gekennzeichnet, dass** zwischen dem Bügelabschnitt (12) und dem Schwenkträger (11) eine Feststelleinrichtung (16) ausgebildet ist.

8. Lagertechnikstapler nach Anspruch 7, **dadurch gekennzeichnet, dass** die Feststelleinrichtung (16) an der Innenseite des Bügelabschnitts (12) angeordnet ist.

9. Lagertechnikstapler nach Anspruch 7 oder 8, **dadurch gekennzeichnet, dass** die Feststelleinrichtung (16) von einer Klemmeinrichtung (21), insbesondere einer Klemmschraube für die Rastverzahnung (20), gebildet ist.

10. Lagertechnikstapler nach Anspruch 7 oder 8, **dadurch gekennzeichnet, dass** die Feststelleinrichtung (16) von einem Arretierbolzen (15), insbesondere einem federbelasteten Arretierbolzen, gebildet ist.

11. Lagertechnikstapler nach einem der Ansprüche 1 bis 10, **dadurch gekennzeichnet, dass** mindestens eine Sensoreinrichtung zur Erfassung der eingeklappten Stellung der Seitenbügel (8a; 8b) für den Mitgängerbetrieb und zur Erfassung der ausgeklappten Stellung der Seitenbügel (8a; 8b) für den Mitfahrerbetrieb vorgesehen ist.

## Claims

1. Warehouse forklift, in particular pallet truck, for optional operation in the pedestrian mode and stand-on mode, with a driver workplace module which comprises a driver stand-on platform, in particular a foldable driver stand-on platform, and pivotable side bars, **characterized in that**, in the position for the stand-on mode, the side bars (8a; 8b) are adjustable in height for adapting the height of the side bars to the height of an operator standing on the driver stand-on platform and are securable in different height positions.

2. Warehouse forklift according to Claim 1, **characterized in that** the side bars (8a; 8b) are mounted on a driving part (2) so as to be foldable about a respective substantially vertical pivot axis (9a; 9b), wherein the side bars (8a; 8b) are adjustable in height in an opened-out position for the stand-on mode.

3. Warehouse forklift according to Claim 2, **characterized in that**, in the opened-out position, the side bars (8a; 8b) are pivotable about a substantially horizontal pivot axis (10) for the adjustment in height.

4. Warehouse forklift according to Claim 3, **characterized in that** the side bars (8a; 8b) consist of a respective pivoting support (11), which is mounted on the driving part (2) so as to be foldable about the substantially vertical pivot axis (9a; 9b), and a bar portion (12) which is arranged on the pivoting support (11) so as to be adjustable about the substantially horizontal pivot axis (10).

5. Warehouse forklift according to Claim 4, **characterized in that** the bar portions (12) are adjustable in an infinitely variable manner about the horizontal pivot axis (10) and are securable in an infinitely variable manner.

6. Warehouse forklift according to Claim 5, **characterized in that** a latching toothing (20) is formed between the pivoting support (11) and the bar portion (12).

7. Warehouse forklift according to one of Claims 4 to 6, **characterized in that** a locking device (16) is formed between the bar portion (12) and the pivoting support (11).

8. Warehouse forklift according to Claim 7, **characterized in that** the locking device (16) is arranged on the inside of the bar portion (12).

9. Warehouse forklift according to Claim 7 or 8, **characterized in that** the locking device (16) is formed by a clamping device (21), in particular a clamping screw for the latching toothing (20).

10. Warehouse forklift according to Claim 7 or 8, **characterized in that** the locking device (16) is formed by a retaining bolt (15), in particular a spring-loaded retaining bolt.

11. Warehouse forklift according to one of Claims 1 to 10, **characterized in that** at least one sensor device is provided for detecting the folded-in position of the side bars (8a; 8b) for the pedestrian mode and for detecting the opened-out position of the side bars (8a; 8b) for the stand-on mode.

## Revendications

1. Chariot de manutention pour entrepôt, en particulier chariot élévateur, pouvant fonctionner au choix en mode de fonctionnement à conducteur accompagnant ou à conducteur porté, avec un module de poste de conduite qui comprend une plate-forme de station debout pour le conducteur, en particulier une plate-forme de station debout rabattable pour le conducteur, ainsi que des arceaux latéraux pivotants, **caractérisé en ce que** les arceaux latéraux (8a ; 8b) dans la position pour le mode de fonctionnement à conducteur porté peuvent être réglés en hauteur pour l'adaptation en hauteur des arceaux latéraux à la taille d'un opérateur debout sur la plate-forme de station debout et peuvent être fixés dans différentes positions en hauteur.

2. Chariot de manutention pour entrepôt selon la revendication 1, **caractérisé en ce que** les arceaux latéraux (8a ; 8b) sont montés sur une partie d'entraînement (2) de manière à pouvoir être rabattus autour d'un axe de pivotement essentiellement vertical (9a ; 9b), les arceaux latéraux (8a ; 8b) pouvant être réglés en hauteur dans une position sortie par rabattement, pour le mode de fonctionnement à conducteur porté.

3. Chariot de manutention pour entrepôt selon la revendication 2, **caractérisé en ce que** les arceaux latéraux (8a ; 8b) peuvent pivoter autour d'un axe de pivotement essentiellement horizontal (10) dans la position sortie par rabattement en vue de leur réglage en hauteur.

4. Chariot de manutention pour entrepôt selon la revendication 3, **caractérisé en ce que** les arceaux latéraux (8a ; 8b) se composent d'un support pivotant respectif (11) qui est monté sur la partie d'entraînement (2) de manière rabattable autour de l'axe de pivotement (9a ; 9b) essentiellement vertical, et d'une portion d'arceau (12) disposée sur le support pivotant (11) de manière réglable autour de l'axe de pivotement essentiellement horizontal (10).

5. Chariot de manutention pour entrepôt selon la revendication 4, **caractérisé en ce que** les portions d'arceau (12) peuvent être déplacées en continu autour de l'axe de pivotement horizontal (10) et peuvent être fixées en continu.

6. Chariot de manutention pour entrepôt selon la revendication 5, **caractérisé en ce qu'**une denture d'encliquetage (20) est prévue entre le support pivotant (11) et la portion d'arceau (12).

7. Chariot de manutention pour entrepôt selon l'une quelconque des revendications 4 à 6, **caractérisé en ce qu'**un dispositif de fixation (16) est prévu entre la portion d'arceau (12) et le support pivotant (11).

8. Chariot de manutention pour entrepôt selon la revendication 7, **caractérisé en ce que** le dispositif de fixation (16) est disposé sur le côté intérieur de la portion d'arceau (12).

9. Chariot de manutention pour entrepôt selon la revendication 7 ou 8, **caractérisé en ce que** le dispositif de fixation (16) est formé par un dispositif de serrage (21), en particulier une vis de serrage pour la denture d'encliquetage (20).

10. Chariot de manutention pour entrepôt selon la revendication 7 ou 8, **caractérisé en ce que** le dispositif de fixation (16) est formé par un boulon d'arrêt (15), en particulier un boulon d'arrêt sollicité par ressort.

11. Chariot de manutention pour entrepôt selon l'une quelconque des revendications 1 à 10, **caractérisé en ce qu'**au moins un dispositif de capteur est prévu pour la détection de la position rentrée par rabattement des arceaux latéraux (8a ; 8b) pour le mode de fonctionnement à conducteur accompagnant et pour la détection de la position sortie par rabattement des arceaux latéraux (8a ; 8b) pour le mode de fonctionnement à conducteur porté.
